(19) Europäisches Patentamt
European Patent Office
Office européen des brevets

(11) EP 4 810 567 A1

(12) EUROPEAN PATENT APPLICATION
published in accordance with Art. 153(4) EPC

(43) Date of publication:
**23.09.2026 Bulletin 2026/39**

(21) Application number: **24891689.2**

(22) Date of filing: **01.11.2024**

(51) International Patent Classification (IPC):
***C08L 53/02*** (2006.01) ***C08L 23/14*** (2006.01)
***C08L 91/00*** (2006.01) ***C08K 5/52*** (2006.01)

(52) Cooperative Patent Classification (CPC):
**C08K 5/52; C08L 23/14; C08L 53/02; C08L 91/00**

(86) International application number:
**PCT/KR2024/017067**

(87) International publication number:
**WO 2025/105742 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 KR 20230156567**

(71) Applicant: **LOTTE CHEMICAL CORPORATION**
**Seoul 05551 (KR)**

(72) Inventors:
- **CHOI, Won Young**
**Uiwiang-si Gyeonggi-do 16073 (KR)**
- **SEO, Seok Beom**
**Uiwiang-si Gyeonggi-do 16073 (KR)**
- **SHIN, Na Hyeon**
**Uiwiang-si Gyeonggi-do 16073 (KR)**
- **YOON, Soo Hyun**
**Uiwiang-si Gyeonggi-do 16073 (KR)**
- **BAN, Kyun Ha**
**Uiwiang-si Gyeonggi-do 16073 (KR)**

(74) Representative: **Germain Maureau**
**12, rue Boileau**
**69006 Lyon (FR)**

# (54) ENVIRONMENT-FRIENDLY THERMOPLASTIC ELASTOMER COMPOSITION AND MOLDED ARTICLE PRODUCED THEREFROM

(57) A thermoplastic elastomer composition of the present invention comprises about 100 parts by weight of a thermoplastic elastomer, about 30 to about 70 parts by weight of a polyolefin resin, about 40 to about 90 parts by weight of a vegetable oil, and about 100 to about 150 parts by weight of a phosphorus nitrogen-based flame retardant. The thermoplastic elastomer composition exhibits excellent environment-friendliness, flame retardancy, moldability, slip properties, and low hardness characteristics, and enables the reduction of unpleasant odors.

EP 4 810 567 A1

## Description

[Technical Field]

The present invention relates to an environment-friendly thermoplastic elastomer composition and a molded article produced therefrom. More particularly, the present invention relates to a thermoplastic elastomer composition that has good properties in terms of environment-friendly properties, flame retardancy, moldability, slip properties, low hardness characteristics, and the like while ensuring reduction of unpleasant odors, and a molded article produced therefrom.

[Background Art]

Unlike solid rubber, a thermoplastic elastomer (TPE) is cross-linked physically, rather than chemically, and thus shows solid rubber-like elasticity at ambient temperature while retaining the ability to be freely processed through extrusion and injection molding. Under normal conditions, long molecules that make up the thermoplastic elastomer are irregularly coiled and, when tensile force is applied to the thermoplastic elastomer, the long molecules stretch in the direction in which the force acts. Then, upon removal of the applied tensile force, the molecules rapidly return to their original, disordered arrangement. Due to the advantages of thermoplastic elastomers, such as processability and elastic recovery, demand therefor as a substitute for non-reusable rubber has rapidly increased, leading to development of a wide range of related products. For example, thermoplastic elastomers can be used in various applications, such as building gaskets, automotive parts, handgrips, hoses, cushioning materials, and wire insulators.

Incorporation of a petroleum-derived mineral oil, such as paraffin oil, into a thermoplastic elastomer composition facilitates adjustment of properties of the composition, such as hardness, moldability, compression set (C. Set), and the like. However, such a mineral oil can cause reduction in environment-friendly properties, generation of unpleasant odors, and defects in appearance, and the like.

Therefore, there is a need for a thermoplastic elastomer composition that has good properties in terms of environment-friendly properties, flame retardancy, moldability, slip properties, low hardness characteristics, and the like while ensuring reduction of unpleasant odors.

The background art of the present invention is disclosed in Korean Patent Application Publication No. 10-2016-0114994 and the like.

[Disclosure]

[Technical Problem]

It is one object of the present invention to provide a thermoplastic elastomer composition that has good properties in terms of environment-friendly properties, flame retardancy, moldability, slip properties, low hardness characteristics, and the like while ensuring reduction of unpleasant odors.

It is another object of the present invention to provide a molded article produced from the thermoplastic elastomer composition.

The above and other objects of the present invention can be achieved by embodiments of the present invention described below.

[Technical Solution]

1. One aspect of the present invention relates to a thermoplastic elastomer composition. The thermoplastic elastomer composition comprises: about 100 parts by weight of a thermoplastic elastomer; about 30 to about 70 parts by weight of a polyolefin resin; about 40 to about 90 parts by weight of a vegetable oil; and about 100 to about 150 parts by weight of a phosphorus-nitrogen flame retardant.
2. In embodiment 1, the thermoplastic elastomer may have a weight average molecular weight of about 100,000 g/mol to about 450,000 g/mol.
3. In embodiment 1 or 2, the polyolefin resin may include at least one of polypropylene; a random copolymer obtained by polymerization of at least two of propylene, ethylene, butylene, or octene; a block copolymer obtained by blending ethylene-propylene rubber with polypropylene; polyethylene; an ethylene-vinyl acetate copolymer; or a copolymer of an $\alpha$-olefin.
4. In embodiments 1 to 3, the polyolefin resin may have a weight average molecular weight of about 100,000 g/mol to

about 550,000 g/mol.

5. In embodiments 1 to 4, the polyolefin resin may have a melt-flow index of about 0.5 g/10 min to about 40 g/10 min, as measured at a temperature of 190°C under a load of 2.16 kg in accordance with ASTM D1238.

6. In embodiments 1 to 5, the vegetable oil may comprise at least one of olive oil, canola oil, grape seed oil, or castor oil.

7. In embodiments 1 to 6, the vegetable oil may have a thermal decomposition temperature of about 325°C to about 360°C, as measured over a temperature range of 30°C to 850°C at a heating rate of 20°C/min using a thermogravimetric analyzer (TGA).

8. In embodiments 1 to 7, the phosphorus-nitrogen flame retardant may comprise at least one of piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, or ammonium polyphosphate.

9. In embodiments 1 to 8, the thermoplastic elastomer composition may have a flame retardancy of V-0 or higher and a total burning time of about 1 sec to about 29 sec, as measured on a 1.5 mm thick specimen by the UL-94 vertical test method.

10. In embodiments 1 to 9, the thermoplastic elastomer composition may have a melt-flow index of about 15 g/10 min to about 40 g/10 min, as measured at a temperature of 230°C under a load of 5 kg in accordance with ISO 1133.

11. In embodiments 1 to 10, the thermoplastic elastomer composition may have a tackiness of about 0.11 to about 0.30, as measured using a scratch hardness tester.

12. In embodiments 1 to 11, the thermoplastic elastomer composition may have a Shore A hardness of about 50 to about 85, as measured on a stack of three specimens each having a thickness of 2 mm using a Shore A durometer in accordance with ISO 868.

13. In embodiments 1 to 12, the thermoplastic elastomer composition may have an odor grade of 7 to 8, as measured according to the Geely Auto odor test method.

14. Another aspect of the present invention relates to a molded article. The molded article is produced from the thermoplastic elastomer composition according to any one of embodiments 1 to 13.

[Advantageous Effects]

Embodiments of the present invention provide a thermoplastic elastomer composition that has good properties in terms of environment-friendly properties, flame retardancy, moldability, slip properties, low hardness characteristics, and the like while ensuring reduction of unpleasant odors, and a molded article produced therefrom.

[Best Mode]

Hereinafter, embodiments of the present invention will be described in detail.

A thermoplastic elastomer composition according to the present invention comprises: (A) thermoplastic elastomer; (B) polyolefin resin; (C) vegetable oil; and (D) phosphorus-nitrogen flame retardant.

As used herein to represent a specific numerical range, "a to b" is defined as "≥a and ≤b".

(A) Thermoplastic elastomer

The thermoplastic elastomer according to one embodiment of the invention is used together with the polyolefin resin, the specific vegetable oil, and the phosphorus-nitrogen flame retardant as one capable of improving environment-friendly properties, flame retardancy, moldability, slip properties, low hardness characteristics, and the like, and reducing unpleasant odors, without deterioration in mechanical properties of the thermoplastic elastomer composition. The thermoplastic elastomer may include a styrene-based thermoplastic elastomer, an amide-based thermoplastic elastomer, a urethane-based thermoplastic elastomer, an ester-based thermoplastic elastomer, and the like, which are used in typical thermoplastic elastomer compositions. Preferably, a styrene-based thermoplastic elastomer, such as a styrene-ethylene/butylene-styrene (SEBS) copolymer and the like, may be used.

In some embodiments, the thermoplastic elastomer may have a weight average molecular weight of about 100,000 g/mol to about 450,000 g/mol, for example, about 150,000 g/mol to about 400,000 g/mol, as measured by gel permeation chromatography (GPC). Within this range, the thermoplastic elastomer composition can have good properties in terms of mechanical properties, elastic recovery, and the like.

(B) Polyolefin resin

The polyolefin resin according to one embodiment of the invention is used together with the thermoplastic

elastomer, the specific vegetable oil, and the phosphorus-nitrogen flame retardant as one capable of improving environment-friendly properties, flame retardancy, moldability, slip properties, low hardness characteristics, and the like, and reducing unpleasant odors, without deterioration in mechanical properties of the thermoplastic elastomer composition. The polyolefin resin may include a polyolefin resin used in typical thermoplastic elastomer compositions.

In some embodiments, the polyolefin resin may include polypropylene; a random copolymer obtained by polymerization of at least two of propylene, ethylene, butylene, or octene; a block copolymer obtained by blending ethylene-propylene rubber with polypropylene; polyethylene; an ethylene-vinyl acetate copolymer; a copolymer of an $\alpha$-olefin; and combinations thereof.

In some embodiments, the polyolefin resin may have a weight average molecular weight of about 100,000 g/mol to about 550,000 g/mol, for example, about 150,000 g/mol to about 500,000 g/mol, as measured by GPC. Within this range, the thermoplastic elastomer composition can have good properties in terms of mechanical properties, elastic recovery, moldability, and the like.

In some embodiments, the polyolefin resin may have a melt-flow index (MI) of about 0.5 g/10 min to about 40 g/10 min, for example, about 0.8 g/10 min to about 40 g/10 min, as measured at a temperature of 190°C under a load of 2.16 kg in accordance with ASTM D1238. Within this range, the thermoplastic elastomer composition can have good properties in terms of mechanical properties, elastic recovery, moldability, and the like.

In some embodiments, the polyolefin resin may be present in an amount of about 30 to about 70 parts by weight, for example, about 35 to about 65 parts by weight, relative to about 100 parts by weight of the thermoplastic elastomer. If the content of the polyolefin resin is less than about 30 parts by weight relative to about 100 parts by weight of the thermoplastic elastomer, the thermoplastic elastomer composition can suffer from deterioration in moldability, slip properties, workability (miscibility between raw materials), and the like, whereas, if the content of the polyolefin resin exceeds about 70 parts by weight relative to about 100 parts by weight of the thermoplastic elastomer, the thermoplastic elastomer composition can suffer from deterioration in flame retardancy, slip properties, workability (miscibility between raw materials), and the like.

(C) Vegetable oil

The vegetable oil according to one embodiment of the invention is an environment-friendly material, and is applied together with the thermoplastic elastomer, the polyolefin resin, and the phosphorus-nitrogen flame retardant to be capable of improving environment-friendly properties, flame retardancy, moldability, slip properties, low hardness characteristics, and the like, and reducing unpleasant odors, without deterioration in mechanical properties of the thermoplastic elastomer composition. As the vegetable oil, plant-derived vegetable oils can be used.

In some embodiments, the vegetable oil may have a thermal decomposition temperature of about 325°C to about 360°C, for example, about 329°C to about 355°C, as measured by thermogravimetric analysis (TGA) over a temperature range of 30°C to 850°C at a heating rate of 20°C/min. Within this range, the thermoplastic elastomer composition can have good properties in terms of slip properties, workability (miscibility between raw materials), moldability, and the like, and can reduce unpleasant odors.

In some embodiments, the vegetable oil may include at least one of olive oil, canola oil, grape seed oil, or castor oil.

In some embodiments, the vegetable oil may have a kinematic viscosity of about 90 cSt to about 180 cSt, for example, about 100 cSt to about 160 cSt, as measured at 40°C in accordance with ASTM D445, but is not limited thereto. Within this range, the thermoplastic elastomer composition can have good properties in terms of processability, flexibility, and the like.

In some embodiments, the vegetable oil may be present in an amount of about 40 to about 90 parts by weight, for example, about 50 parts by weight to about 80 parts by weight, relative to about 100 parts by weight of the thermoplastic elastomer. If the content of the vegetable oil is less than about 40 parts by weight relative to about 100 parts by weight of the thermoplastic elastomer, the thermoplastic elastomer composition can suffer from deterioration in environment-friendly properties, moldability, slip properties, workability (miscibility between raw materials), and the like, whereas, if the content of the vegetable oil exceeds about 90 parts by weight relative to about 100 parts by weight of the thermoplastic elastomer, the thermoplastic elastomer composition can suffer from deterioration in flame retardancy, workability (miscibility between raw materials), and the like.

In some embodiments, a weight ratio of the polyolefin resin to the vegetable oil may range from about 1:0.7 to about 1:2.5, for example, about 1:0.8 to about 1:2.1. Within this range, the thermoplastic elastomer composition can have further improved properties in terms of flame retardancy, moldability, slip properties, low hardness characteristics, and the like, while reducing unpleasant odors.

(D) Phosphorus-nitrogen flame retardant

The phosphorus-nitrogen flame retardant according to one embodiment of the invention is used together with the

thermoplastic elastomer, the polyolefin resin, and the specific vegetable oil as one capable of improving environment-friendly properties, flame retardancy, moldability, slip properties, low hardness characteristics, and the like, and reducing unpleasant odors, without deterioration in mechanical properties of the thermoplastic elastomer composition. As the phosphorus-nitrogen flame retardant, any phosphorus-nitrogen flame retardant used in typical thermoplastic elastomer compositions can be used.

In some embodiments, the phosphorus-nitrogen flame retardant may include piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, ammonium polyphosphate, combinations thereof, polysalts thereof, and the like. For example, the phosphorus-nitrogen flame retardant may include melamine polyphosphate, piperazine pyrophosphate, and combinations thereof.

In some embodiments, the phosphorus-nitrogen flame retardant may be present in an amount of about 100 to about 150 parts by weight, for example, about 100 to about 140 parts by weight, relative to about 100 parts by weight of the thermoplastic elastomer. If the content of the phosphorus-nitrogen flame retardant is less than about 100 parts by weight relative to about 100 parts by weight of the thermoplastic elastomer, the thermoplastic elastomer composition can suffer from deterioration in flame retardancy, moldability, and slip properties, whereas, if the content of the phosphorus-nitrogen flame retardant exceeds about 150 parts by weight relative to about 100 parts by weight of the thermoplastic elastomer, the thermoplastic elastomer composition can suffer from deterioration in slip properties and the like, and may fail to achieve an effect of reducing unpleasant odors.

In some embodiments, a weight ratio of the polyolefin resin to the phosphorus-nitrogen flame retardant may range from about 1:1.5 to about 1:4, for example, about 1:1.8 to about 1:3.5. Within this range, the thermoplastic elastomer composition can have good properties in terms of flame retardancy, moldability, and slip properties, and the like.

In some embodiments, a weight ratio of the vegetable oil to the phosphorus-nitrogen flame retardant may range from about 1:1.2 to about 1:3, for example, about 1:1.4 to about 1:2.5. Within this range, the thermoplastic elastomer composition can have good properties in terms of flame retardancy, moldability, slip properties, low hardness characteristics, and the like, and can reduce unpleasant odors.

The thermoplastic elastomer composition according to one embodiment of the invention may further include additives used in typical thermoplastic elastomer compositions. Examples of the additives may include antioxidants, anti-dripping agents, thermal stabilizers, fillers, UV stabilizers, lubricants, dyes, pigments, and mixtures thereof, but is not limited thereto. The additives may be optionally present in an amount of about 0.001 to about 40 parts by weight, for example, about 0.1 to about 10 parts by weight, relative to about 100 parts by weight of the thermoplastic elastomer.

The thermoplastic elastomer composition according to one embodiment of the invention may be prepared in pellet form by mixing the aforementioned components, followed by melt extrusion in a typical twin-screw extruder at a temperature of about 150°C to about 250°C, for example, about 170°C to about 230°C.

In some embodiments, the thermoplastic elastomer composition is environment-friendly since the content of the environment-friendly material (vegetable oil) is about 15 wt% or more out of 100 wt% of the total weight of the thermoplastic elastomer composition.

In some embodiments, the thermoplastic elastomer composition may have a flame retardancy of V-0 or higher, as measured on a 1.5 mm thick specimen by the UL-94 vertical test method.

In some embodiments, the thermoplastic elastomer composition may have a total burning time of about 1 sec to about 29 sec, for example, about 5 sec to about 27 sec, as measured on a 1.5 mm thick specimen by the UL-94 vertical test method.

In some embodiments, the thermoplastic elastomer composition may have a melt-flow index (MI) of about 15 g/10 min to about 40 g/10 min, for example, about 17 g/10 min to about 35 g/10 min, as measured at a temperature of 230°C under a load of 5 kg in accordance with ISO 1133.

In some embodiments, the thermoplastic elastomer composition may have a tackiness of about 0.11 to about 0.30, for example, about 0.12 to about 0.25, as measured using a scratch hardness tester.

In some embodiments, the thermoplastic elastomer composition may have a Shore A hardness of about 50 to about 85, for example, about 55 to about 80, as measured on a stack of three specimens each having a thickness of 2 mm using a Shore A durometer in accordance with ISO 868. When the Shore A hardness is outside this range, the thermoplastic elastomer composition can be unsuitable for the purpose of the invention due to difficulty in obtaining appropriate elasticity.

In some embodiments, the thermoplastic elastomer composition may have an odor grade of 7 to 8, as measured according to the Geely Auto odor test method.

A molded article according to the present invention is formed from the thermoplastic elastomer composition. The thermoplastic elastomer composition may be prepared in pellet form. The prepared pellets may be manufactured into various molded articles (products) through various molding methods, such as injection molding, extrusion molding, vacuum molding, casting molding, and the like. Such molding methods are well known to a person having ordinary skill in

the art to which the present invention pertains. The molded article is excellent in environment-friendly properties, flame retardancy, moldability, slip properties, and low hardness characteristics, and is capable of reducing unpleasant odors. Thus, the molded article is useful for sealing parts, shock-absorbing parts, and the like, and particularly, for building gaskets, cables, and the like.

[Mode for Invention]

Next, the present invention will be described in more detail with reference to some examples. However, it should be noted that these examples are provided for illustration only and are not to be construed in any way as limiting the present invention.

**EXAMPLE**

Details of components used in Examples and Comparative Examples are as follows:

(A) Thermoplastic elastomer

A styrene-ethylene/butylene-styrene (SEBS) copolymer (weight average molecular weight: about 350,000 g/mol, product name: G1651, manufacturer: Kraton Polymers Corp.) was used.

(B) Polyolefin resin

A polypropylene resin (random copolymer, weight average molecular weight: about 450,000 g/mol, melt-flow index (MI) at 190°C under a load of 2.16 kg: about 1 g/10 min, product name: SB-520, manufacturer: Lotte Chemical Corp.) was used.

(C) Oil

(C1) Canola oil (thermal decomposition onset temperature: about 355°C, product name: Lotte canola oil, manufacturer: Lotte Wellfood Co., Ltd.) was used.
(C2) Olive oil (thermal decomposition onset temperature: about 333°C, product name: Lotte olive oil, manufacturer: Lotte Wellfood Co., Ltd.) was used.
(C3) Paraffin oil (thermal decomposition onset temperature: about 230°C, product name: W-1900H, manufacturer: MiChang Oil Ind.) was used.

(D) Phosphorus-nitrogen flame retardant

A mixture of melamine polyphosphate and piperazine pyrophosphate (product name: SR-202, manufacturer: Shandong Sunrise Co., Ltd.) was used.

**Examples 1 to 8 and Comparative Examples 1 to 7**

The aforementioned components were mixed in amounts as listed in Tables 2, 3, 4, and 5, followed by extrusion at about 220°C, thereby preparing a thermoplastic elastomer composition in pellet form. Here, extrusion was performed using a twin-screw extruder (L/D: 36, diameter: 45 mm). The prepared pellets were dried at 100°C for 4 hours or more, followed by injection molding using a 150-ton injection molding machine (molding temperature: about 200°C, mold temperature: about 40°C), thereby preparing specimens. The prepared specimens were evaluated as to the following properties. Results are shown in Tables 2, 3, 4, and 5.

Property evaluation

(1) Flame retardancy: Flame retardancy rating and total burning time (the sum of a burning time (T1) after the first flame application and a burning time (T2) after the second flame application, unit: sec) were measured on a 1.5 mm thick injection-molded specimen by the UL-94 vertical test method.

(2) Melt-flow Index (MI) (unit: g/10 min): Melt-flow index was measured at a temperature of 230°C under a load of 5 kg in accordance with ISO 1133.
(3) Evaluation of slip properties: Tackiness was calculated according to Equation 1.

[Equation 1] [95] Tackiness ($\mu$) = Static coefficient of friction ($\mu_s$) - Kinetic coefficient of friction ($\mu_k$) [Equation 1]

In Equation 1, the static coefficient of friction and kinetic coefficient of friction were measured on a flat specimen having a size of 2 mm×50 mm×150 mm by pressing an indenter having an aluminum tip (R-processed tip, diameter: 4 mm) against the specimen under a load of 0.5 kgf, followed by moving the indenter at a speed of 100 mm/sec, using a scratch hardness tester (model name: type 18L, manufacturer: Heidon Co., Ltd.). The static coefficient of friction was defined as a coefficient of friction measured from the force applied to the indenter while stationary, and the kinetic coefficient of friction was defined as a coefficient of friction measured from the force applied to the indenter while moving. The lower the tackiness, the better the slip properties were judged to be.
(4) Hardness: Shore A hardness was measured on a stack of three specimens each having a thickness of 2 mm using a Shore A durometer in accordance with ISO 868.
(5) Odor level (unit: grade): 100 g of a specimen of the thermoplastic elastomer composition in pellet form was evaluated as to odor level in accordance with Q/JLY J7110538C (odor test standard of GEELY AUTO). Five trained assessors, each experienced with at least 10 evaluations based on this standard, rated the odor of the specimen according to the criteria in Table 1, followed by averaging assessments of the assessors, including decimal points, thereby obtaining a final odor grade. As shown in Table 1, a lower odor grade indicates the presence of a more unpleasant odor.

Table 1

| Odor grade | Details | Sensations perceived by humans |
|---|---|---|
| 10 | No odor | Comfortable |
| 9 | Barely perceptible, difficult to identify the type of odor | |
| 8 | Presence of odor is detected; slightly pleasant | |
| 7 | Odor is not pungent and clearly detectable | Distinctly pungent but bearable |
| 6 | Odor is slightly pungent and clearly detectable | |
| 5 | Odor is moderately pungent and clearly detectable | Somewhat irritating and unbearable |
| 4 | Unpleasant odor; slightly less disgusting | |
| 3 | Pungent odor, disgusting | Irritation and vomiting |
| 2 | Pungent odor, very disgusting | |
| 1 | Stifling and unbearable odor | |

Table 2

| | Example | | | |
|---|---|---|---|---|
| | 1 | 2 | 3 | 4 |
| (A) (parts by weight) | 100 | 100 | 100 | 100 |
| (B) (parts by weight) | 35 | 50 | 65 | 50 |
| (C1) (parts by weight) | 65 | 65 | 65 | 50 |
| (C2) (parts by weight) | - | - | - | - |
| (C3) (parts by weight) | - | - | - | - |
| (D) (parts by weight) | 120 | 120 | 120 | 120 |
| Flame retardancy rating | V-0 | V-0 | V-0 | V-0 |
| Total burning time | 15 | 17 | 19 | 10 |

(continued)

| | Example | | | |
|---|---|---|---|---|
| | 1 | 2 | 3 | 4 |
| Melt-flow index | 20 | 24 | 28 | 22 |
| Tackiness | 0.16 | 0.14 | 0.12 | 0.12 |
| Shore A hardness | 65 | 71 | 80 | 75 |
| Odor grade | 8 | 8 | 8 | 8 |

Table 3

| | Example | | | |
|---|---|---|---|---|
| | 5 | 6 | 7 | 8 |
| (A) (parts by weight) | 100 | 100 | 100 | 100 |
| (B) (parts by weight) | 50 | 50 | 50 | 50 |
| (C1) (parts by weight) | 80 | - | 65 | 65 |
| (C2) (parts by weight) | - | 65 | - | - |
| (C3) (parts by weight) | - | - | - | - |
| (D) (parts by weight) | 120 | 120 | 100 | 140 |
| Flame retardancy rating | V-0 | V-0 | V-0 | V-0 |
| Total burning time | 20 | 17 | 25 | 5 |
| Melt-flow index | 33 | 18 | 18 | 27 |
| Tackiness | 0.21 | 0.21 | 0.23 | 0.13 |
| Shore A hardness | 55 | 65 | 62 | 70 |
| Odor grade | 8 | 8 | 8 | 8 |

Table 4

| | Comparative Example | | | |
|---|---|---|---|---|
| | 1 | 2 | 3 | 4 |
| (A) (parts by weight) | 100 | 100 | 100 | 100 |
| (B) (parts by weight) | 25 | 75 | 50 | 50 |
| (C1) (parts by weight) | 65 | 65 | 35 | 100 |
| (C2) (parts by weight) | - | - | - | - |
| (C3) (parts by weight) | - | - | - | - |
| (D) (parts by weight) | 120 | 120 | 120 | 120 |
| Flame retardancy rating | V-0 | V-1 | V-0 | V-1 |
| Total burning time | 21 | 33 | 22 | 38 |
| Melt-flow index | 11 | 35 | 12 | 34 |
| Tackiness | 0.39 | 0.31 | 0.45 | 0.21 |
| Shore A hardness | 50 | 80 | 70 | 55 |
| Odor grade | 7 | 7 | 7 | 8 |

Table 5

| | Comparative Example | | |
|---|---|---|---|
| | 5 | 6 | 7 |
| (A) (parts by weight) | 100 | 100 | 100 |
| (B) (parts by weight) | 50 | 65 | 65 |
| (C1) (parts by weight) | - | 65 | 65 |
| (C2) (parts by weight) | - | - | - |
| (C3) (parts by weight) | 65 | - | - |
| (D) (parts by weight) | 120 | 90 | 160 |
| Flame retardancy rating | V-0 | V-1 | V-0 |
| Total burning time | 18 | 40 | 15 |
| Melt-flow index | 15 | 13 | 34 |
| Tackiness | 0.37 | 0.32 | 0.38 |
| Shore A hardness | 62 | 64 | 80 |
| Odor grade | 6 | 7 | 6 |

From the above results, it could be seen that the thermoplastic elastomer compositions according to the present invention exhibited good properties in terms of environment-friendly properties, flame retardancy (flame retardancy rating, total burning time), moldability (melt-flow index), slip properties (tackiness), and low hardness characteristics (Shore A hardness), and were capable of reducing unpleasant odors.

Conversely, the thermoplastic elastomer composition of Comparative Example 1, in which the content of the polyolefin resin was less than the range of the present invention, suffered from deterioration in moldability, slip properties, and the like. The thermoplastic elastomer composition of Comparative Example 2, in which the content of the polyolefin resin exceeded the range of the present invention, suffered from deterioration in flame retardancy, slip properties, and the like. The thermoplastic elastomer composition of Comparative Example 3, in which the content of the vegetable oil was less than the range of the present invention, suffered from deterioration in environment-friendly properties, moldability, slip properties, and the like. The thermoplastic elastomer composition of Comparative Example 4, in which the content of the vegetable oil exceeded the range of the present invention, suffered from deterioration in flame retardancy and the like. In the case of Comparative Example 5, in which paraffin oil (C3) having a thermal decomposition temperature of less than the range of the present invention was used instead of the vegetable oil of the present invention, it could be seen that slip properties and the like were deteriorated, and the effect of reducing unpleasant odors could not be obtained. In addition, the thermoplastic elastomer composition of Comparative Example 6, in which the content of the phosphorus-nitrogen flame retardant was less than the range of the present invention, suffered from deterioration in flame retardancy, moldability, slip properties, and the like. The thermoplastic elastomer composition of Comparative Example 7, in which the content of the phosphorus-nitrogen flame retardant exceeded the range of the present invention, suffered from deterioration in slip properties and the like, and could not achieve the effect of reducing unpleasant odors.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the invention. The scope of the invention should be defined by the appended claims rather than by the foregoing description, and the claims and equivalents thereto are intended to cover such modifications and the like as would fall within the scope of the invention.

## Claims

**1.** A thermoplastic elastomer composition comprising:

about 100 parts by weight of a thermoplastic elastomer;
about 30 to about 70 parts by weight of a polyolefin resin;
about 40 to about 90 parts by weight of a vegetable oil; and
about 100 to about 150 parts by weight of a phosphorus-nitrogen flame retardant.

2. The thermoplastic elastomer composition according to claim 1, wherein the thermoplastic elastomer has a weight average molecular weight of about 100,000 g/mol to about 450,000 g/mol.

3. The thermoplastic elastomer composition according to claim 1 or 2, wherein the polyolefin resin comprises at least one of polypropylene; a random copolymer obtained by polymerization of at least two of propylene, ethylene, butylene, or octene; a block copolymer obtained by blending ethylene-propylene rubber with polypropylene; polyethylene; an ethylene-vinyl acetate copolymer; or a copolymer of an $\alpha$-olefin.

4. The thermoplastic elastomer composition according to any one of claims 1 to 3, wherein the polyolefin resin has a weight average molecular weight of about 100,000 g/mol to about 550,000 g/mol.

5. The thermoplastic elastomer composition according to any one of claims 1 to 4, wherein the polyolefin resin has a melt-flow index of about 0.5 g/10 min to about 40 g/10 min, as measured at a temperature of 190°C under a load of 2.16 kg in accordance with ASTM D1238.

6. The thermoplastic elastomer composition according to any one of claims 1 to 5, wherein the vegetable oil comprises at least one of olive oil, canola oil, grape seed oil, or castor oil.

7. The thermoplastic elastomer composition according to any one of claims 1 to 6, wherein the vegetable oil has a thermal decomposition temperature of about 325°C to about 360°C, as measured by thermogravimetric analysis (TGA) over a temperature range of 30°C to 850°C at a heating rate of 20°C/min.

8. The thermoplastic elastomer composition according to any one of claims 1 to 7, wherein the phosphorus-nitrogen flame retardant comprises at least one of piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, or ammonium polyphosphate.

9. The thermoplastic elastomer composition according to any one of claims 1 to 8, wherein the thermoplastic elastomer composition has a flame retardancy of V-0 or higher, and a total burning time of about 1 sec to about 29 sec, as measured on a 1.5 mm thick specimen by the UL-94 vertical test method.

10. The thermoplastic elastomer composition according to any one of claims 1 to 9, wherein the thermoplastic elastomer composition has a melt-flow index of about 15 g/10 min to about 40 g/10 min, as measured at a temperature of 230°C under a load of 5 kg in accordance with ISO 1133.

11. The thermoplastic elastomer composition according to any one of claims 1 to 10, wherein the thermoplastic elastomer composition has a tackiness of about 0.11 to about 0.30, as measured using a scratch hardness tester.

12. The thermoplastic elastomer composition according to any one of claims 1 to 11, wherein the thermoplastic elastomer composition has a Shore A hardness of about 50 to about 85, as measured on a stack of three specimens each having a thickness of 2 mm using a Shore A durometer in accordance with ISO 868.

13. The thermoplastic elastomer composition according to any one of claims 1 to 12, wherein the thermoplastic elastomer composition has an odor grade of 7 to 8, as measured according to the Geely Auto odor test method.

14. A molded article formed from the thermoplastic elastomer composition according to any one of claims 1 to 13.

**INTERNATIONAL SEARCH REPORT**

International application No. **PCT/KR2024/017067**

**A. CLASSIFICATION OF SUBJECT MATTER**

**C08L 53/02**(2006.01)i; **C08L 23/14**(2006.01)i; **C08L 91/00**(2006.01)i; **C08K 5/52**(2006.01)i

According to International Patent Classification (IPC) or to both national classification and IPC

**B. FIELDS SEARCHED**

Minimum documentation searched (classification system followed by classification symbols)

C08L 53/02(2006.01); C08J 3/20(2006.01); C08K 3/00(2006.01); C08K 5/00(2006.01); C08K 5/5313(2006.01); C08L 21/00(2006.01); C08L 25/06(2006.01); C08L 51/04(2006.01); C08L 53/00(2006.01); C08L 67/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성(thermoplastic), 폴리올레핀(polyolefin), 오일(oil), 난연제(flame retardant)

**C. DOCUMENTS CONSIDERED TO BE RELEVANT**

| Category* | Citation of document, with indication, where appropriate, of the relevant passages | Relevant to claim No. |
|---|---|---|
| Y | US 2016-0376432 A1 (TEKNOR APEX COMPANY et al.) 29 December 2016 (2016-12-29)<br>See abstract; paragraphs [0039]-[0127]; and table 5. | 1-3 |
| Y | KR 10-2009-0066379 A (LG CHEM, LTD.) 24 June 2009 (2009-06-24)<br>See claims 1-10. | 1-3 |
| A | KR 10-2016-0022469 A (I, Ho Yeong) 02 March 2016 (2016-03-02)<br>See claims 1-10. | 1-3 |
| A | KR 10-2016-0114994 A (HYUNDAI MOTOR COMPANY et al.) 06 October 2016 (2016-10-06)<br>See claims 1-5. | 1-3 |
| A | KR 10-2473869 B1 (LOTTE CHEMICAL CORPORATION) 02 December 2022 (2022-12-02)<br>See claims 1-3. | 1-3 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **31 January 2025** | **31 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/017067**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-14**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2024/017067**

| Patent document cited in search report | Publication date (day/month/year) | Patent family member(s) | Publication date (day/month/year) |
|---|---|---|---|
| US 2016-0376432 A1 | 29 December 2016 | US 10125255 B2 | 13 November 2018 |
| | | US 2014-0100310 A1 | 10 April 2014 |
| | | US 2014-0100311 A1 | 10 April 2014 |
| KR 10-2009-0066379 A | 24 June 2009 | KR 10-1154462 B1 | 13 June 2012 |
| KR 10-2016-0022469 A | 02 March 2016 | CN 105348711 A | 24 February 2016 |
| | | JP 2016-044301 A | 04 April 2016 |
| | | JP 6039712 B2 | 07 December 2016 |
| | | KR 10-1667453 B1 | 31 October 2016 |
| | | US 2016-0053096 A1 | 25 February 2016 |
| KR 10-2016-0114994 A | 06 October 2016 | None | |
| KR 10-2473869 B1 | 02 December 2022 | CN 114286843 A | 05 April 2022 |
| | | CN 114286843 B | 09 August 2024 |
| | | EP 4053202 A1 | 07 September 2022 |
| | | EP 4053202 A4 | 06 December 2023 |
| | | EP 4053202 B1 | 04 December 2024 |
| | | JP 2023-500010 A | 04 January 2023 |
| | | KR 10-2021-0051694 A | 10 May 2021 |
| | | US 2022-0275194 A1 | 01 September 2022 |
| | | WO 2021-085868 A1 | 06 May 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160114994